(19) **Europäisches Patentamt**
**European Patent Office**
**Office européen des brevets**

(11) **EP 0 877 508 B1**

(12) **FASCICULE DE BREVET EUROPEEN**

(45) Date de publication et mention
de la délivrance du brevet:
**01.08.2007 Bulletin 2007/31**

(51) Int Cl.:
**H04L 9/08** (2006.01)

(21) Numéro de dépôt: **98401079.3**

(22) Date de dépôt: **04.05.1998**

(54) **Procédé et dispositif de distribution quantique de clé de cryptage**

Verfahren und Vorrichtung zur Schlüsselverteilung mittels Quanten-Kryptographie

Method and apparatus for quantum key distribution

(84) Etats contractants désignés:
**DE GB**

(30) Priorité: **06.05.1997 FR 9705573**

(43) Date de publication de la demande:
**11.11.1998 Bulletin 1998/46**

(73) Titulaire: **FRANCE TELECOM**
**75015 Paris (FR)**

(72) Inventeurs:
• **Mazourenko, Youri**
**25030 Besancon Cédex (FR)**
• **Merolla, Jean-Marc**
**25600 Nommay (FR)**

• **Goedgebuer, Jean-Pierre**
**25115 Pouilley les Vignes (FR)**

(74) Mandataire: **Poulin, Gérard et al**
**BREVALEX**
**3, rue du Docteur Lancereaux**
**75008 Paris (FR)**

(56) Documents cités:
**WO-A-96/06491**

• **KLYSHKO D N: "Quantum cryptography using multicolored or multidirectional photons" PHYSICS LETTERS A, 10 MARCH 1997, ELSEVIER, NETHERLANDS, vol. 227, no. 1-2, pages 1-4, XP002052966 ISSN 0375-9601**

## Description

### Domaine technique

La présente invention a pour objet un procédé et un dispositif de distribution quantique de clé de cryptage. Elle trouve des applications en cryptographie, c'est-à-dire dans la transmission secrète d'information.

### Etat de la technique antérieure

L'invention relève de la cryptographie à clé secrète. Dans cette technique, un message en clair est transformé en message codé à l'aide d'un algorithme à clé secrète. Cette clé est formée d'une suite de nombres aléatoires. L'expéditeur du message et le destinataire doivent échanger cette clé secrète, pour pouvoir crypter et décrypter correctement le message.

Si la clé est aussi longue que le message et si elle n'est utilisée qu'une seule fois, alors le signal est impossible à décrypter sans la clé.

Le problème posé par ce genre de cryptage est qu'il faut transmettre la clé sans que celle-ci puisse être détectée par un tiers espionnant les échanges entre l'expéditeur et le destinataire.

La distribution quantique de clé ou "cryptage quantique" résout ce problème. Cette technique met en oeuvre certaines propriétés de la physique quantique, notamment celles-ci :

- l'état d'une particule élémentaire (par exemple l'état de polarisation d'un photon), ne peut être déterminé que si la mesure est réalisée dans la même base que celle qui a été utilisée pour préparer cet état (par exemple, on ne pourra pas déterminer l'état d'un photon polarisé circulairement, à droite ou à gauche, en mesurant cet état dans une base de polarisation linéaire) ;

- toute mesure projette le système étudié dans un état propre de la base utilisée pour effectuer cette mesure ; il n'est plus possible alors de connaître l'état dans lequel était le système avant la mesure si la base n'est pas la même ; ainsi, mesurer la polarisation linéaire d'un photon préparé dans un état de polarisation circulaire produit une perte de connaissance de son état initial de polarisation.

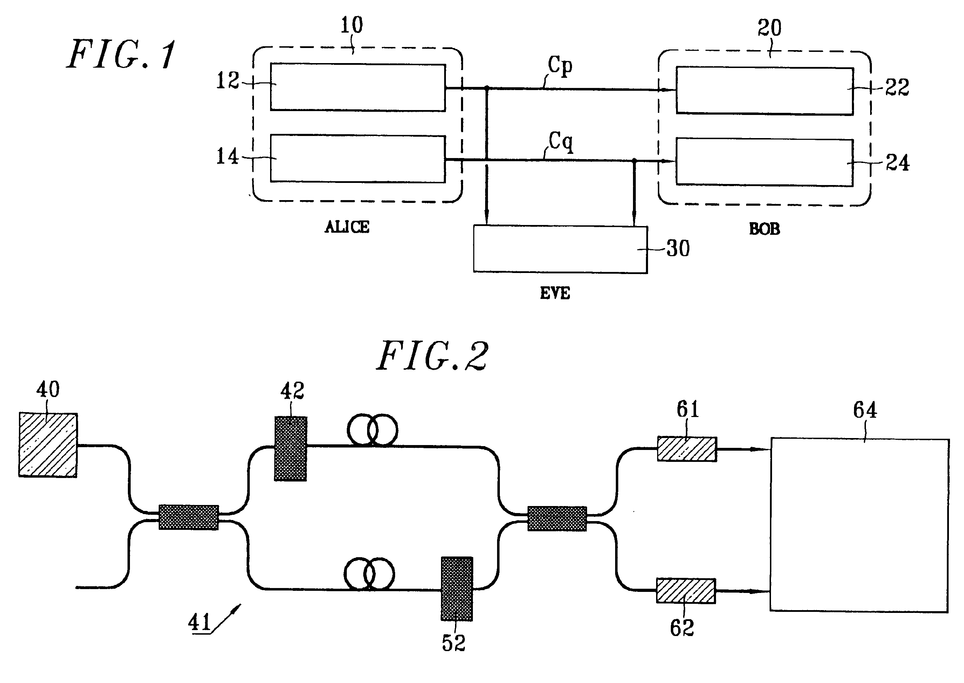

La figure 1 annexée permet de préciser quelque peu les principes de la distribution quantique de clé. L'expéditeur et le destinataire sont appelés Alice et Bob, selon une terminologie usuelle en cryptographie. Alice dispose d'un ensemble d'émission 10 constitué de moyens d'émission classique 12 et de moyens d'émission quantique 14. Bob dispose d'un ensemble de réception 20 constitué de moyens de réception classique 22 et de moyens de réception quantique 24. Alice et Bob communiquent par deux canaux, l'un qui est public, soit Cp, l'autre qui est quantique, soit Cq. Par ailleurs, on suppose qu'une tierce personne, appelée Eve, espionne les lignes Cp et Cq.

Le processus général comporte les étapes suivantes :

1) Alice envoie par le canal quantique Cq une séquence de photons à Bob, en choisissant de manière aléatoire dans quel type d'état chaque photon sera préparé ; chaque état sert à coder un bit d'information ; on considère que la correspondance entre la valeur du bit de codage et l'état qui le code est publiquement connue.

2) A la réception, Bob décide, au hasard, de mesurer l'état de chaque photon détecté sans savoir a priori dans quel état ce dernier a été préparé.

3) Après la communication quantique, Alice et Bob discutent des résultats de leur transmission par la ligne publique Cp ; cette discussion a pour objet d'écarter les mauvaises mesures qui s'expliquent par les principes quantiques rappelés plus haut ; ceci réalisé, Alice et Bob possèdent une chaîne commune formée d'une suite aléatoire de bits ; en effet, la présence d'une écoute provoque un taux d'erreur supérieur à celui qui serait obtenu en l'absence d'écoute ; cette augmentation du taux d'erreur est due aux mauvaises mesures (d'après les principes quantiques énoncés) effectuées par Eve qui veut connaître l'état du photon envoyé par Alice.

4) Le taux d'erreur est calculé grâce à un procédé publiquement connu et permet alors de détecter la présence de l'espion.

On peut classer les protocoles utilisés actuellement en deux groupes :

- le protocole à quatre états : Alice utilise deux bases non orthogonales entre elles, formées par deux états orthogonaux. Bob utilise aléatoirement une des deux bases pour mesurer l'état du photon envoyé par Alice. Ce protocole a été proposé par S.J.D. PHOENIX et P.D. TOWNSEND dans l'article intitulé "Quantum Cryptography and Secure Optical Communications" publié dans la "revue BT Techn. Journ"., 11, 2, pp 65-75, 1993 ;

- le protocole à deux états : Alice utilise seulement deux états non orthogonaux d'un photon pour coder son information. Ce protocole est décrit dans le document US-A-5,307,410.

Pour ce dernier protocole la procédure est la suivante :

1) Alice envoie une séquence de photons un par un, en choisissant de manière aléatoire le type d'état dans lequel elle les prépare (états non orthogonaux). Ces deux états représentent les bits 0 et 1. La correspondance entre état et valeur du bit est publiquement connue.
2) A la réception, Bob essaie de mesurer l'état du photon envoyé par Alice. Pour cela, il choisit aléatoirement une base de mesure parmi deux bases réciproquement orthogonales aux deux états choisis par Alice. Deux cas peuvent se présenter :

a) Bob ne détecte rien ; cela signifie, soit qu'il n'y a pas de photon à détecter, soit que la base utilisée pour effectuer la mesure est orthogonale à l'état du photon transmis ; Bob ne peut donc savoir quel bit Alice lui a envoyé.
b) La base utilisée par Bob n'est pas orthogonale à l'état envoyé par Alice ; alors il a une probabilité non nulle à détecter un photon ; dans ce cas (quand il détecte un photon), Bob connaît l'état (donc le bit correspondant) du photon envoyé par Alice (car il sait que c'est l'état qui n'est pas orthogonal à la base qu'il a utilisée).

3) Pour connaître l'état des photons envoyés par Alice, Eve doit effectuer le même type de mesures que Bob et est donc soumise aux mêmes contraintes que celui-ci. Quand elle détecte un photon, elle connaît avec certitude l'état du photon envoyé par Alice et peut renvoyer vers Bob un photon dans le même état (elle n'a bien sûr qu'une chance sur deux de faire le bon choix). Quand elle ne détecte rien, elle ne peut savoir si c'est à cause d'un mauvais choix de base, ou s'il n'y avait pas de photon. Elle doit alors, soit supprimer le signal de transmission, soit envoyer un photon dans l'état qu'elle suppose être le bon et provoque ainsi des erreurs entre Alice et Bob.
4) Bob annonce publiquement quand il a détecté un photon (ou quand il n'en a pas détecté), mais ne révèle pas la base utilisée pour effectuer la mesure. Les bits restants doivent être absolument identiques s'il n'y a pas eu d'interception de message. Afin de tester si leur ligne n'a pas été espionnée, Alice et Bob comparent publiquement une partie de leur clé, cette partie étant ensuite sacrifiée. La présence d'Eve sera détectée par les erreurs qu'elle a provoquées.

S'agissant du codage utilisé pour placer les photons dans un certain état, il peut être de deux types. Le premier est le codage par polarisation. L'information porte sur l'état de polarisation du photon. Cette méthode est décrite dans l'article de G. H. BENNET, G. BRASSARD, A. EKERT intitulé "Quantum Cryptography" publié dans "Scientific American" 33, p. 26, 1993. Elle est décrite également dans l'article de C.H. BENNETT et al intitulé "Experimental Quantum Cryptography" publié dans "Journal of Cryptology" 5, pp 3-28, 1992. Le problème avec cette technique est la difficulté de conserver la polarisation des photons sur une longue distance.

Selon un second type de codage on agit sur la phase optique. Le dispositif est représenté schématiquement sur la figure 2 annexée. Il comprend une source à un photon 40, un interféromètre Mach-Zehnder symétrique 41 comprenant un modulateur de phase 42 propre à Alice et un modulateur de phase 52 propre à Bob. A la sortie de l'interféromètre on trouve deux détecteurs à un photon 61, 62 et un circuit 64 de décryptage et de comptage.

Ce dispositif fonctionne de la manière suivante : Alice et Bob introduisent par les modulateurs 42 et 52, pour chaque photon émis par la source 40, une différence de phase. Alice choisit arbitrairement à quelle phase correspondent les bits 0 et 1. Bob détermine l'état du bit envoyé grâce aux deux détecteurs 61, 62 en suivant le deuxième protocole de mesure décrit précédemment.

Cette solution est difficilement utilisable sur de grandes distances, (c'est-à-dire pour les systèmes utilisant des fibres optiques) car il est nécessaire de conserver la même relation de phase entre les deux bras de l'interféromètre sur toute la distance.

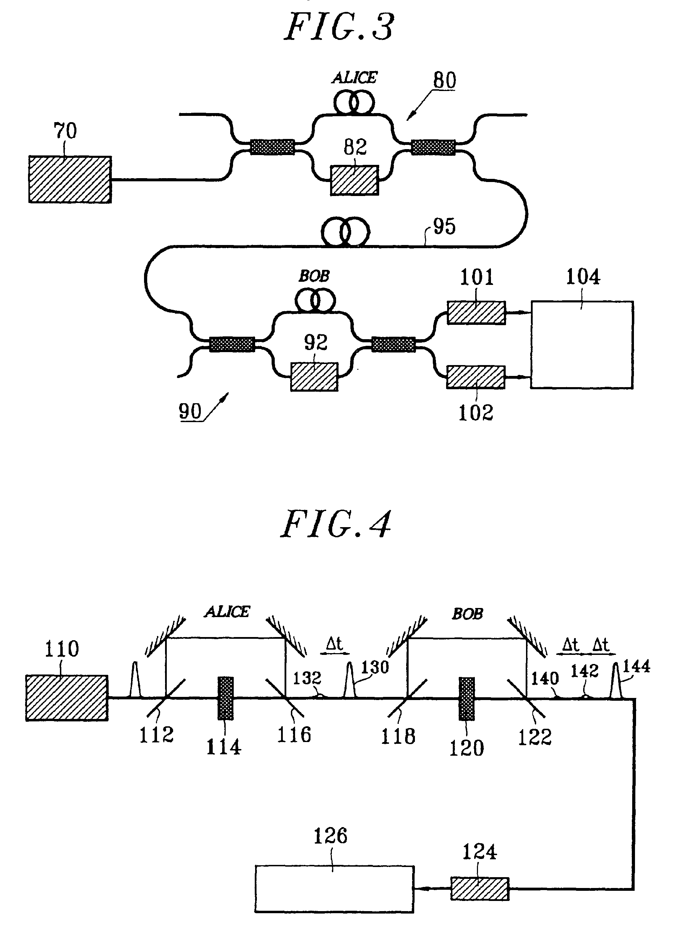

Un autre système est donc employé pour les grandes distances, qui est représenté par la figure 3. Il comprend encore une source à un photon 70, un premier interféromètre de Mach-Zehnder 80 utilisé à l'émission, avec un premier modulateur de phase 82 propre à Alice et un second interféromètre de Mach-Zehnder 90 utilisé en réception avec un second modulateur de phase 92 propre à Bob, deux détecteurs à un photon 101, 102 et un moyen de décryptage et de comptage 104. Les deux interféromètres 80, 90 sont reliés par un canal 95, qui est, en pratique, une fibre optique.

Ce dispositif fonctionne de la manière suivante. Chaque interféromètre possède, sur l'un de ses bras, un déphaseur optique 82, 92 permettant la transmission de la clé. Il est nécessaire, cependant, que les signaux provenant des deux bras d'un même interféromètre n'interfèrent pas. Il faut donc séparer ces deux signaux, soit en utilisant par exemple un retard entre les deux bras supérieur à la longueur de cohérence de la source (qui est, dans ce cas, impulsionnelle), soit en utilisant un modulateur accousto-optique pour séparer de manière fréquentielle le signal se propageant dans un des deux bras des interféromètres.

Un autre dispositif possible est celui qui est décrit par le brevet US-A-5 307 410 déjà cité. Le dispositif est représenté sur la figure 4 annexée. Il comprend une source impulsionnelle 110, un premier interféromètre, propre à Alice, avec une première lame semi-transparente 112, un premier modulateur de phase 114 et une deuxième lame semi-transparente 116 ; il comprend encore un second interféromètre propre à Bob, avec une troisième lame semi-transparente 118, un second modulateur de phase 120 et une quatrième lame semi-transparente 122 ; le dispositif comprend encore un détecteur à un photon 124 et enfin un circuit de comptage et de décryptage 126.

La source 110 et les longueurs des bras sont telles que les impulsions lumineuses sont séparées par un intervalle supérieur à la longueur des impulsions. Mais, contrairement au dispositif précédent, les impulsions se propageant dans les deux bras de l'interféromètre n'ont pas la même intensité (à cause des lames semi-transparentes). Ainsi, à la sortie du premier interféromètre, on observe deux impulsions 130, 132 séparées d'un retard Δt. L'impulsion 130, dite de référence, est celle qui a l'intensité classique. L'autre impulsion 132, dite impulsion de signal, contenant en moyenne moins d'un photon, a subi un déphasage contrôlé par Alice. A la sortie du deuxième interféromètre on observe trois impulsions. La première, 140, est d'intensité négligeable. Elle provient de l'impulsion de signal à nouveau atténuée. La seconde, 142, est la superposition de la première impulsion de signal retardée (mais non atténuée) et de l'impulsion de référence atténuée et déphasée par Bob. L'intensité de la deuxième impulsion, 142, dépend donc à la fois des déphasages introduits par Bob et Alice. C'est elle qui est utilisée pour transmettre la clé de cryptage. La dernière impulsion, 144, est la partie de l'impulsion de référence qui a été encore retardée et dont l'intensité est constante. Elle sera utilisée pour déterminer si la ligne a été espionnée.

Les dispositifs décrits précédemment présentent tous des inconvénients :

1) Pour ce qui est du codage par polarisation, le problème technique vient de la difficulté de conserver rigoureusement la polarisation à travers des fibres optiques utilisées en télécommunication. Pour résoudre ce problème il faut :

a) utiliser des fibres à maintien de polarisation, mais cette solution ne permet pas l'emploi des réseaux optiques existants ;
b) utiliser un système de contrôle de polarisation : on envoie un signal polarisé permettant de déterminer les changements de polarisation le long de la ligne de transmission et de les corriger. Dans ce cas, le système de transmission quantique devient plus complexe et il faut régulièrement contrôler la fluctuation de polarisation le long du canal quantique (et donc diminuer le débit de transmission de la clé).

2) Pour ce qui est du codage par phase optique, les systèmes présentés précédemment contiennent deux interféromètres (émetteur-récepteur) dont les bras sont relativement longs. La difficulté est de maintenir constant le retard entre les deux bras avec une grande précision.

Le but de la présente invention est justement de remédier à ces inconvénients.

**Exposé de l'invention**

L'invention a pour objet un procédé de distribution quantique de clé de cryptage dans lequel, de manière connue :

- un expéditeur émet une séquence de photons en choisissant aléatoirement, pour chaque photon, un état parmi deux états déterminés, chaque photon constituant ainsi un code pour un bit d'information,
- un destinataire détecte les photons en choisissant aléatoirement une base de mesure parmi deux bases déterminées,
- le destinataire indique, par un canal public, à l'expéditeur, quels sont les photons qu'il a détectés, mais sans révéler quelle base il a utilisée,

l'expéditeur et le destinataire retiennent les bits pour lesquels les photons ont été détectés comme constituant une clé de cryptage entre eux ;

le procédé de l'invention est caractérisé par le fait que :

A) l'expéditeur :

a) engendre un faisceau lumineux ayant une certaine pulsation (wo) et une certaine intensité,
b) produit un premier signal électrique de modulation ayant une certaine pulsation ($\Omega$),
c) donne à ce premier signal électrique de modulation une première phase ($\varnothing_A$) choisie aléatoirement parmi deux valeurs, le code de chaque bit étant ainsi déterminé par cette première phase ($\varnothing_A$),
d) module le faisceau lumineux par le premier signal électrique, cette modulation faisant apparaître, dans le faisceau lumineux modulé, un mode central (wo) et au moins deux modes latéraux (wo $\pm$ $\Omega$) ,

e) atténue l'intensité du faisceau lumineux de telle sorte que l'intensité des modes latéraux soit suffisamment faible pour qu'il n'existe qu'un seul photon dans les modes latéraux, les photons associés aux bits d'information devant constituer la clé de cryptage étant ainsi les photons transmis dans les modes latéraux, et non dans le mode central,

B) le destinataire :

a) produit un second signal électrique de modulation en synchronisme avec le premier signal électrique de modulation utilisé à l'émission,

b) donne au second signal électrique une seconde phase ($\varnothing$B) choisie aléatoirement parmi deux valeurs déterminées, ces deux valeurs étant différentes des deux valeurs choisies à l'émission pour la première phase ($\varnothing_A$),

c) module le faisceau lumineux reçu par le second signal électrique,

d) sépare optiquement le mode central reçu et les modes latéraux,

e) détecte, dans l'un des modes latéraux, la présence d'un photon, cette détection dépendant de la différence de phase ($\varnothing$) entre le premier déphasage ($\varnothing_A$) choisi par l'expéditeur et le second déphasage ($\varnothing_B$) choisi par le destinataire,

f) communique à l'expéditeur, par le canal public, quels sont les photons qu'il a détectés, mais sans révéler les valeurs du second déphasage ($\varnothing_B$) qu'il a utilisées,

l'expéditeur et le destinataire retiennent alors, comme clé de cryptage, l'ensemble des bits correspondant aux photons détectés.

De préférence, la modulation effectuée à l'émission est une modulation d'amplitude, cette amplitude ayant la forme 1 + a cos ($\Omega$t + $\varnothing_A$) où a est le taux de modulation et $\Omega$ la pulsation de la modulation. Dans ce cas, il existe deux modes latéraux, distants de $\Omega$ du mode central. Le taux de modulation est choisi de préférence inférieur à 0,5 et par exemple, voisin de 0,1.

On pourrait, sans sortir du cadre de l'invention, utiliser d'autres modulations, comme une modulation de fréquence, l'essentiel étant d'obtenir au moins un mode latéral grâce auquel on va transmettre les photons.

De préférence, le procédé de l'invention se complète par des opérations de vérification visant à déterminer si le canal quantique a été espionné par un tiers. Pour cela, l'expéditeur et le destinataire sacrifient quelques éléments de leur clé, en les comparant publiquement, pour déterminer les éventuelles erreurs qui auront été provoquées par l'espion.

L'invention a également pour objet un dispositif pour la mise en oeuvre du procédé qui vient d'être défini. Ce dispositif comprend :

A) Côté expéditeur :

a) une source lumineuse apte à engendrer un faisceau lumineux ayant une certaine pulsation (wo) et une certaine intensité,

b) des moyens pour produire un premier signal électrique de modulation,

c) des moyens pour donner à ce premier signal électrique de modulation une première phase ($\varnothing_A$) choisie aléatoirement parmi deux valeurs déterminées, le code de chaque bit étant ainsi déterminé par cette première phase ($\varnothing_A$),

d) des moyens pour moduler le faisceau lumineux par ce premier signal électrique, cette modulation faisant apparaître, dans le faisceau lumineux modulé, un mode central (wo) et au moins deux modes latéraux (wo $\pm$ $\Omega$),

e) un atténuateur de l'intensité du faisceau lumineux, de telle sorte que l'intensité des modes latéraux soit suffisamment faible pour qu'il n'existe statistiquement qu'un seul photon dans les modes latéraux, les photons associés aux bits d'information devant constituer la clé de cryptage étant ainsi les photons transmis dans les modes latéraux et non dans le mode central,

B) côté destinataire :

a) des moyens pour produire un second signal électrique de modulation en synchronisme avec le premier signal électrique de modulation utilisé à l'émission,

b) des moyens pour donner au second signal électrique une seconde phase ($\varnothing_B$) choisie aléatoirement parmi deux valeurs déterminées, ces deux valeurs étant différentes des deux valeurs déterminées choisies à l'émission pour la première phase ($\varnothing_A$),

c) des moyens pour moduler le faisceau lumineux reçu par le second signal électrique,

d) un analyseur pour séparer optiquement le mode central reçu et les modes latéraux,

e) un photodétecteur recevant l'un des modes latéraux, le signal délivré par ce photodétecteur dépendant de la différence de phase ($\varnothing$) entre le premier déphasage ($\varnothing_A$) choisi par l'expéditeur et le second déphasage ($\varnothing_B$) choisi par le destinataire,

f) des moyens pour communiquer à l'expéditeur, par un canal public, quels sont les photons qui ont été détectés, mais sans révéler les valeurs du second déphasage ($\varnothing_B$) utilisées,

et, côté expéditeur et côté destinataire, des moyens pour retenir comme clé de cryptage, l'ensemble des bits correspondant aux photons détectés.

**Brève description des figures**

- la figure 1, déjà décrite, est un diagramme général d'un dispositif de distribution quantique de clé de cryptage ;
- la figure 2, déjà décrite, illustre un dispositif de distribution quantique de clé utilisant un codage de phase optique ;
- la figure 3, déjà décrite, illustre un dispositif de distribution quantique de clé sur une longue distance utilisant un codage de phase optique ;
- la figure 4, déjà décrite, illustre un dispositif de distribution quantique de clé de cryptage à deux états non orthogonaux ;
- la figure 5 montre un dispositif de distribution quantique de clé conforme à l'invention ;
- la figure 6A, montre la densité spectrale d'énergie observée à la sortie du premier modulateur et les figures 6B, 6C, 6D la densité spectrale d'énergie observée à la sortie du second modulateur en fonction du déphasage : pour 6B le déphasage est nul, pour 6C le déphasage est égal à $\pi$, et pour 6D le déphasage est égal à $\pi/2$ ;
- la figure 7 illustre un montage utilisé pour vérifier la faisabilité du procédé ;
- la figure 8 montre les variations du signal de sortie d'un analyseur de spectre constitué par un Fabry-Pérot en fonction du déplacement de l'un de ses miroirs ;
- la figure 9 montre le rapport entre l'intensité du mode central et l'intensité des deux premiers modes latéraux en fonction de l'amplitude de modulation ;
- les figures 10A, 10B, 10C montrent les variations de l'intensité du premier mode en fonction du déphasage pour différentes amplitudes de modulation : pour 10A l'amplitude de modulation est égale à 2 ; pour 10B l'amplitude est égale à 0,8 ; 10C : l'amplitude est égale à 0,1 ;
- les figures 11A, 11B, 11C montrent la densité spectrale observée à la sortie du Fabry-Pérot avec, respectivement, un déphasage de 0, de $\pi/2$ et de $\pi$ ; les figures 11D, 11E, 11F, 11G, 11H les tensions de commande (en bas) et les variations d'intensité (en haut) du premier mode de modulation sélectionné par le Fabry-Pérot, en fonction du déphasage (11D : déphasage de 0 à $\pi$) (11E et 11F : déphasage voisin de $\pi/4$) (11G, 11H : le déphasage prend deux valeurs, 0 et $\pi/2$).

**Exposé détaillé de modes de réalisation**

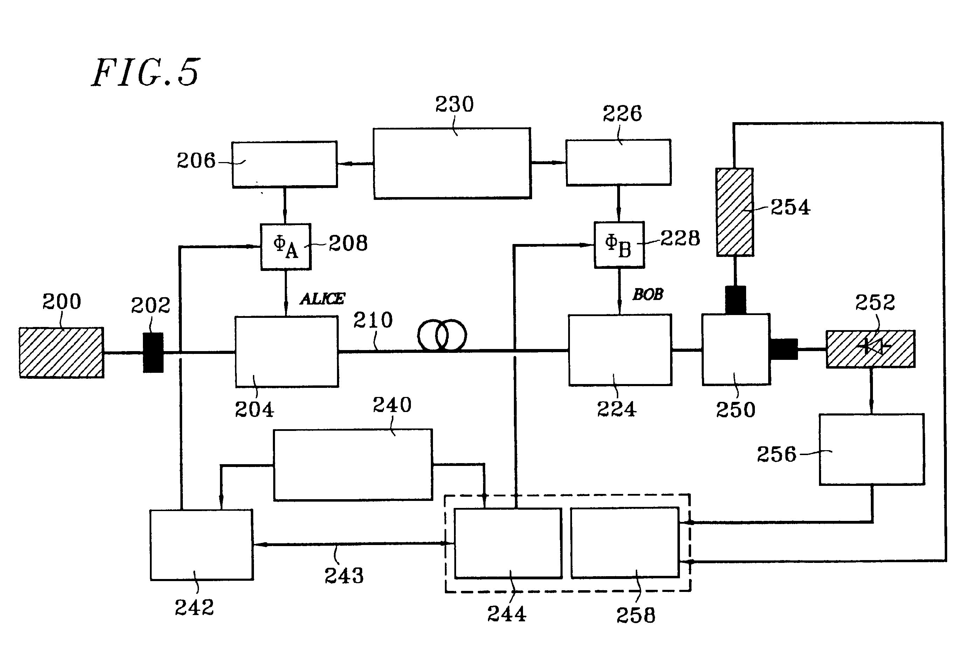

Le dispositif représenté sur la figure 5 comprend, côté émission, une source monochromatique 200 (constituée par exemple par un laser à semi-conducteur comme un laser à réaction distribuée (DFB) fonctionnant à 1 µm ou à 1,5 µm), un atténuateur 202, un premier modulateur optique 204 commandé par une porteuse, celle-ci étant produite par un générateur 206, la phase $\varnothing_A$ de cette porteuse étant réglée par un déphaseur 208. L'onde optique modulée est transmise sur une ligne 210, qui peut être une fibre optique. Cette ligne constitue le canal quantique.

Côté réception, le dispositif comprend un second modulateur 224, commandé par une porteuse produite par un générateur local 226, la phase $\varnothing_B$ de cette porteuse étant réglée par un déphaseur 228.

Ces différents moyens électroniques sont synchronisés, entre émetteur et récepteur, d'abord par un circuit de synchronisation des fréquences de modulation 230, qui commande les deux générateurs locaux 206 et 226, et ensuite par un circuit de synchronisation de la commande des déphasages 240, qui commande un premier circuit 242 de contrôle et de mise en mémoire du déphasage électrique $\varnothing_A$ imposé par le déphaseur 208, et un second circuit 244 de contrôle et de mise en mémoire du déphasage électrique $\varnothing_B$ imposé par le déphaseur 228. Un canal public 243 sert à échanger et comparer les résultats.

Côté récepteur, le dispositif comprend encore un filtre spectral 250, par exemple du type interféromètre Fabry-Pérot, un détecteur à un photon 252, (par exemple une photodiode à avalanche), placé derrière le filtre spectral 250, un détecteur multiphotonique 254, par exemple du type photodiode, un compteur de photons 256 relié au détecteur à un photon 252 et un circuit 258 de contrôle et de mise en mémoire du comptage de photons.

Ce dispositif fonctionne de la manière suivante. Le faisceau lumineux émis par la source 200 est atténué par l'atténuateur réglable 202 pour obtenir une intensité de sortie faible mais assez importante pour être considérée comme classique. Ce faisceau atténué constitue le faisceau de référence. Le faisceau de référence est modulé soit en amplitude soit en phase par le modulateur 204. Cette modulation périodique est, dans le plus simple des cas, sinusoïdale. Elle est produite par le générateur local 206. On appelle Ao et $\omega$o respectivement l'amplitude et la pulsation du champ optique à l'entrée du modulateur 204. A la sortie, de ce même modulateur, le champ ayant subi une modulation périodique de pulsation $\Omega$ et d'amplitude |f| supposée très inférieure à l'unité (f étant complexe), son amplitude devient :

$$A \approx Ao(1 + f \cos (\Omega t))$$

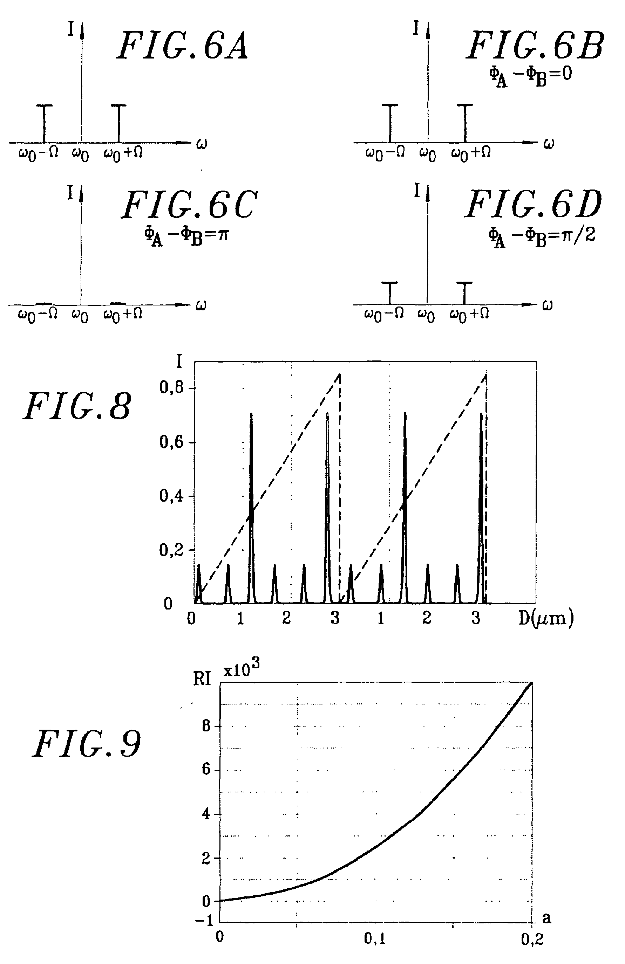

Comme le montre la figure 6A, cette modulation d'amplitude fait apparaître deux modes latéraux aux deux fréquences latérales séparées de $\Omega$ de la pulsation initiale $\omega$o. L'amplitude de ces modes latéraux est Aof/2. Ce sont ces fréquences latérales qui, selon l'invention, sont utilisées pour la transmission quantique. L'intensité de ces modes latéraux doit être suffisamment faible pour qu'on puisse considérer qu'il n'y a qu'un seul photon. Plus strictement, il faut que le temps moyen séparant deux photons de même pulsation soit plus grand que l'intervalle de temps utilisé pour transmettre un bit d'information. Ceci est réalisé en contrôlant l'amplitude de modulation.

Le code du bit d'information s'effectue en introduisant un décalage de phase $\phi_A$ dans le signal de modulation. Ce décalage est produit par le déphaseur 208 sous la commande du circuit 242. L'amplitude du faisceau à la sortie du premier modulateur 204 devient :

$$A_1 \approx Ao(1 + f \cos (\Omega t + \phi_A))$$

Ce signal est transmis vers le second modulateur 224 via la fibre optique 210. Cette fibre constitue le canal de transmission quantique.

A son tour, Bob, grâce à son générateur local 226, module le signal optique reçu avec la même amplitude. Il introduit lui-même une phase $\phi_B$ grâce au déphaseur 228. L'amplitude à la sortie du deuxième modulateur 224 est de la forme :

$$A_1 \approx Ao(1 + f \cos(\Omega t + \phi_A)) + f \cos(\Omega t + \phi_B))$$

$$\approx Ao (1 + 2 f \cos((\phi_A - \phi_B)/2) \cos(\Omega t + (\phi_B + \phi_A)/2)$$

L'intensité des modes latéraux dépend donc des phases $\phi_A$ et $\phi_B$ introduites par l'émetteur et le récepteur :

$$I \approx 4 |Aof|^2 (\cos((\phi_A - \phi_B)/2) \cos(\Omega t + (\phi_B + \phi_A)/2))^2$$

Les figures 6B, 6C, 6D représentent les intensités respectives des modes latéraux selon les valeurs respectives des déphasages $\phi_A$ et $\phi_B$ : la figure 6B correspond au cas où $\phi_A - \phi_B = 0$, la figure 6C au cas où $\phi_A - \phi_B = \pi$ et la figure 6D au cas où $\phi_A - \phi_B = \pi/2$.

Si l'on suppose que le temps de détection est très grand devant la pulsation optique, alors l'intensité moyenne Q détectée est :

$$Q \approx 4 Qi^2 (\cos ((\phi_A - \phi_B)/2)^2 \text{ avec } Qi = |Aof|^2$$

Pour détecter cette variation d'intensité, Bob utilise le filtre spectral 250, qui permet de séparer le mode central $\omega$o et les modes latéraux $(\omega_O \pm \Omega)$. La détection du faisceau de référence $(\omega O)$ est réalisée par le photodétecteur classique 254 et est nécessaire pour confirmer la présence du bit transmis. La détection du mode latéral est réalisée par le détecteur à un photon 252.

C'est grâce au comportement (dépendant de $\phi_A - \phi_B$) de l'intensité de ce mode latéral qu'Alice et Bob vont pouvoir obtenir une clé de cryptage secrète et détecter la présence éventuelle d'une écoute. En effet, on peut montrer que la probabilité de détecter un photon dans l'un des modes latéraux est proportionnelle à la quantité :

$$[\cos (\phi_A - \phi_B)/2]^2$$

Si $\phi A - \phi_B = \pi$, alors cette probabilité est nulle. Si $\phi_A - \phi_B$ est différent de $\pi$, la probabilité de détecter un photon est non nulle et dépend du nombre moyen de photons détectés.

La transmission quantique s'effectue donc de la manière suivante :

1) Chaque photon permet de transmettre un bit d'information. Alice choisit arbitrairement deux déphasages séparés de $\pi/2$ pour le signal de modulation, pour coder les bits 0 et 1. Par exemple, les déphasages 0 et $\pi/2$ représentent respectivement les bits 0 et 1.

2) Bob essaie de déterminer le bit envoyé par Alice en faisant varier aléatoirement le déphasage de son signal de modulation suivant deux valeurs. Ces deux valeurs sont décalées de $\pi$ par rapport aux déphasages choisis par Alice. Dans l'exemple précédent, Bob utilise les déphasages $\pi$ et $3\pi/2$.

3) Bob communique publiquement à Alice à quels moments il a détecté un photon, mais ne révèle pas la phase qu'il a utilisée.

4) Alice et Bob éliminent tous les bits pour lesquels Bob n'a rien détecté. Ce sont les bits restants qui formeront la clé commune de cryptage.

Si un espion (Eve) est présent sur le canal de transmission, il tentera de déterminer l'état du bit envoyé par Alice et de renvoyer le même bit à Bob pour ne pas être détecté. Pour cela, il utilisera la même procédure et le même système que Bob. Pour détecter sa présence, Alice et Bob doivent sacrifier quelques éléments de leur clé en les comparant publiquement (pour déterminer les erreurs provoquées par Eve).

On peut résumer la technique d'écoute de la manière suivante :

a) si Eve détecte un photon, alors elle détermine avec exactitude l'état du bit envoyé par Alice et envoie le même à Bob pour ne pas être détectée (on rappelle cependant qu'elle n'a qu'une chance sur deux de choisir le bon déphasage).

b) Si Eve ne détecte rien, elle ne peut savoir quelle phase a utilisée Alice. Pour ne pas être détectée elle peut employer les tactiques suivantes :

i) elle décide de renvoyer seulement le signal de référence pour que Bob ne détecte rien à son tour au niveau de son compteur de photon ; elle peut cependant être découverte car, dans ce cas, le modulateur de Bob produira un photon dans le mode latéral, même si la différence de phase entre Alice et lui-même est $\pi$ ; Eve modifie dans ce cas la statistique de détection et, donc, introduit des erreurs supplémentaires détectables ;

ii) elle supprime le signal ; dans ce cas, Bob, ne détectant pas le signal de référence sur son détecteur classique, en déduit la présence d'un espion ;

iii) Eve transmet à Bob le signal déphasé arbitrairement ; dans ce cas elle peut quand même être détectée, car elle peut provoquer des erreurs.

Ainsi, en comparant publiquement les phases qu'ils ont utilisées (pour quelques éléments de leur clé), Alice et Bob peuvent savoir s'il y a écoute (car même pour une différence de phase de $\pi$ Bob pourra détecter un photon).

Les trois tableaux suivants résument ces diverses opérations. Le tableau 1 concerne le protocole de transmission de la clé. Le tableau 2 résume la stratégie utilisée par l'expéditeur de la clé (Alice). Le tableau 3 illustre la détection de la présence d'un espion.

Tableau 1

| Bit envoyé par Alice | 0 | | | 1 | | |
|---|---|---|---|---|---|---|
| Phase utilisée par Alice | 0 | | | $\pi/2$ | | |
| Phase utilisée par Bob | $\pi$ | $3\pi/2$ | | $\pi$ | | $3\pi/2$ |
| Photon détecté par Bob | non | non | oui | non | oui | non |

## EP 0 877 508 B1

(suite)

| Bit lu par Bob | ? | ? | 0 | ? | 1 | ? |
|---|---|---|---|---|---|---|
| Détection annoncée par Bob | non | non | oui | non | oui | non |
| Bit commun | non | non | oui | non | oui | non |

Tableau 2

| Phase utilisée par Alice | 0 | | | | | π/2 | | | | |
|---|---|---|---|---|---|---|---|---|---|---|
| Phase utilisée par Eve | π | | 3π/2 | | | π | | | 3π/2 | |
| Photon détectée par Eve | non | | non | | oui | non | | oui | non | |
| Phase détectée par Eve | ? | | ? | | 0 | ? | | π/2 | ? | |
| Phase choisie par Eve pour falsifier le signal | 0 | π/2 | 0 | π/2 | 0 | 0 | π/2 | 3π/2 | 0 | 3π/2 |
| Détection de l'espion | non | oui | non | oui | non | oui | non | non | oui | non |

Tableau 3

| Phase utilisée par Alice | 0 | | | π/2 | |
|---|---|---|---|---|---|
| Phase choisie par Eve pour falsifier le signal | π/2 | | | 0 | |
| Phase utilisée par Bob | π | | 3 π/2 | π | 3 π/2 |
| Photon détecté par Bob | non | non | oui | non | oui non |
| Détection de l'espion | oui | non | non | non | oui non |

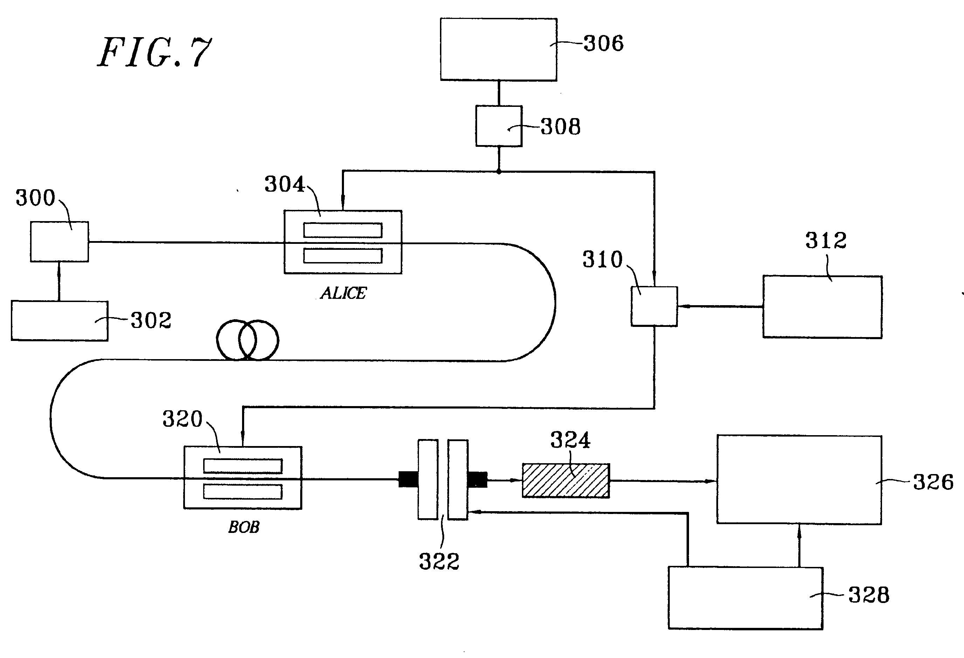

En pratique, un dispositif selon l'invention peut être conforme au schéma de la figure 7, qui porte sur un montage utilisé pour démontrer la faisabilité du procédé. Le dispositif représenté comprend un laser à semi-conducteur 300, du type à réaction distribuée (DFB) asservi en température par un circuit 302. Le modulateur de phase 304 est commandé par un générateur 306 dont la sortie est amplifiée par un amplificateur 308. La sortie de l'amplificateur 308 est directement appliquée au modulateur 304, mais est également appliquée à un déphaseur 310 commandé par un circuit 312. Le modulateur 320 du récepteur est commandé par le déphaseur 310. Les deux modulateurs 304 et 320 travaillent donc avec un déphasage réglable φ. Un analyseur de spectre 322, du type Fabry-Pérot, est commandé par un générateur de rampe 328. L'analyseur 322 est suivi d'un détecteur 324 relié à un oscilloscope 326.

A titre explicatif et nullement limitatif, les caractéristiques des divers composants utilisés peuvent être les suivants :

- le laser DFB utilisé a une largeur spectrale d'environ 1 MHz et sa longueur d'onde est d'environ 1,5582 $\mu$m ;
- la tension de commande du modulateur 304 va de 7 V à 15 V ;
- l'amplificateur 308 est à haute fréquence (10 MHz à 1GHz) et son gain en puissance est de 40 dB ;
- le déphasage électrique entre la voie directe et la voie déphasée est produit par le déphaseur 310 commandé en tension (360°/12V) ; on travaille avec une modulation électrique de 300 MHz.
- le Fabry-Pérot 322 est formé de deux miroirs plans ; il est piloté par un générateur de rampe qui permet de faire varier la position d'un miroir et donc de retrouver le spectre ; le coefficient de réflexion des miroirs est de 0,95 ; les miroirs sont espacés de 15cm de manière à obtenir la résolution maximale ; on obtient une finesse de 60 avec un pouvoir de résolution $\lambda = 1,18.10^{-7}$, soit une largeur de 16 Mhz ; cette résolution est suffisante pour résoudre les bandes latérales de modulation qui apparaissent quand on utilise les modulateurs électro-optiques, car la fréquence de modulation est de 300 MHz ;
- les modulateurs 304 et 320 peuvent être des modulateurs de phase électro-optiques intégrés sur niobate de lithium ; ces modulateurs ont respectivement une bande passante de 500 MHz et 1 GHz ; l'atténuation provoquée par les modulateurs est de l'ordre de 10dB ; la fréquence de modulation est de 300 MHz.

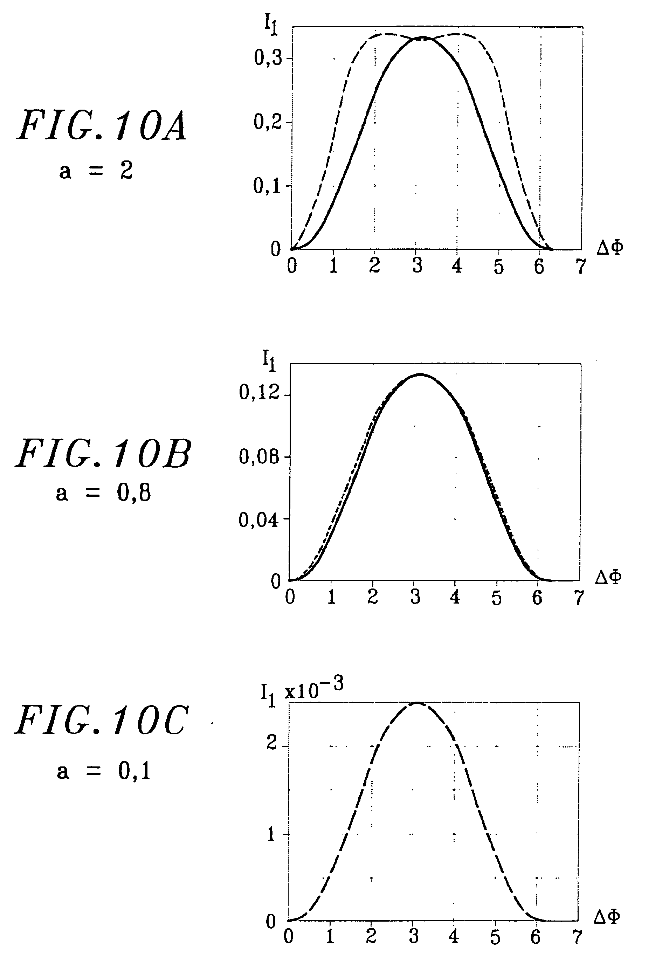

La figure 8 représente la simulation de l'intensité (I) à la sortie du Fabry-Pérot 322 en fonction du déplacement (D) des miroirs lorsque l'un des modulateurs est en fonctionnement. On remarque bien la séparation nette entre les différents modes liés à une fréquence de modulation élevée devant la largeur spectrale des pics de transmission du Fabry-Pérot (respectivement 300 MHz et 16 MHz).

Si l'on veut utiliser un tel dispositif pour la transmission quantique de clés, il est nécessaire de faire en sorte qu'il y ait une probabilité maximale d'avoir un photon ou moins dans le premier mode latéral de modulation et une probabilité minimale d'avoir un photon ou plus dans les autres modes. En supposant que le mode d'ordre 0 contienne, en moyenne, une trentaine de photons, il faut que le premier ordre contienne en moyenne 0,1 photon (pour avoir une faible probabilité d'avoir plus d'un photon dans ce mode).

La figure 9 montre le rapport d'intensité (RI) entre le mode central et les deux premiers modes latéraux en fonction de l'amplitude de modulation $\underline{a}$. Ce rapport est défini par la quantité $[J_1(a)/J_o(a)]$ où $J_1(\ )$ et $J_o(\ )$ sont les fonctions de Bessel d'ordre 1 et 0 et $\underline{a}$ l'amplitude de modulation. Cette figure montre que le taux de modulation doit être faible, plus exactement inférieur ou égal à 0,1 (en unité réduite). On peut remarquer qu'à faible taux de modulation, l'intensité des autres modes devient négligeable ($1,5.10^6$ fois moins grand que l'ordre 0).

On peut rechercher à partir de quelle amplitude de modulation on obtient une modulation de la forme (1 - cos $\Delta\varphi$). Pour cela, on fait varier le déphasage $\Delta\varphi$, et l'on observe comment varie l'intensité du premier mode en fonction du déphasage, pour une amplitude donnée et on la compare à la courbe 1 - cos $\Delta\varphi$. C'est ce que représentent les figures 10A, 10B, 10C. On y voit les variations de l'intensité du premier mode I1 (en trait interrompu) en fonction du déphasage $\Delta\varphi$, pour des amplitudes de modulation $\underline{a}$ égales respectivement à 2, à 0,8 et à 0,1. Les figures 10A, 10B et 10C montrent également, en trait plein, la courbe (1 - cos $\varphi$).

Si l'on compare la courbe (1 - cos $\Delta\varphi$) et les variations de l'intensité en fonction du déphasage, on constate qu'une bonne concordance a lieu pour un taux de modulation de 0,1. Le dispositif peut donc être utilisé à des fins cryptographiques.

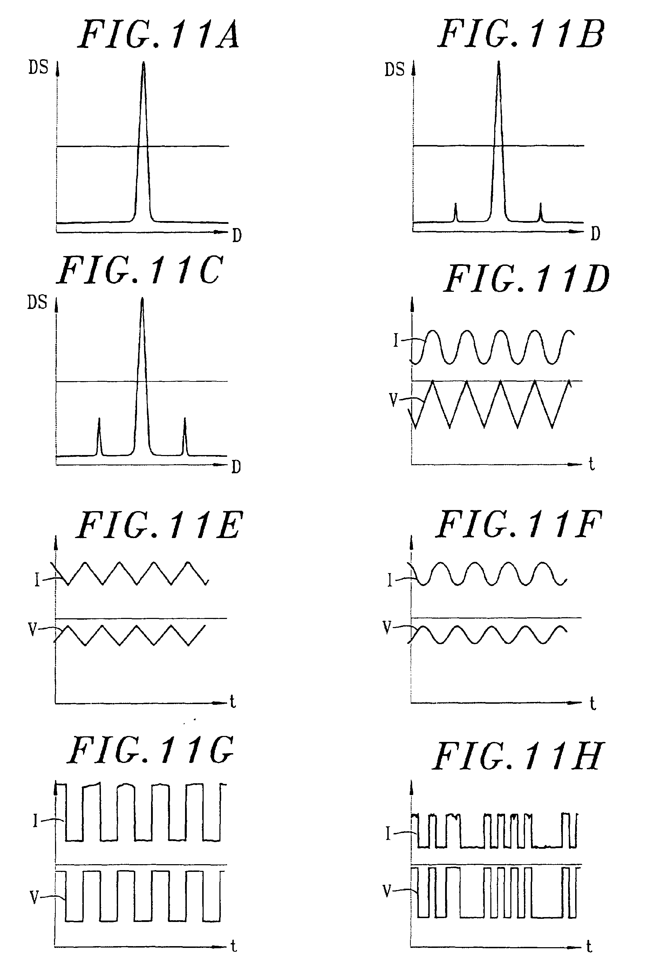

Les figures 11A à 11H rassemblent quelques résultats obtenus dans différentes configurations :

- Fig. 11A, 11B, 11C : densité spectrale DS observée à la sortie du Fabry-Pérot 322 avec, respectivement, un déphasage $\varphi$ de 0, de $\pi/2$ et de $\pi$ entre le signal de commande des deux modulateurs 304 et 322,
- Fig. 11D, 11E, 11F, 11G, 11H : signaux inférieurs : tension de commande V provoquant une variation de déphasage entre les signaux de commande des deux modulateurs signaux supérieurs : variation d'intensité I ; du premier mode de modulation sélectionné par le Fabry-Pérot correspondant au déphasage,
- Fig. 11D : le déphasage varie continûment de manière linéaire de 0 à $\pi$,
- Fig. 11E et 11F : le déphasage varie continûment et faiblement autour de $\pi/4$ : de manière linéaire (11E) et sinusoïdale (11F),
- Fig. 11G et 11H : le déphasage varie suivant deux états 0 et $\pi/2$ : 11G signal périodique, 11H signal apériodique.

A noter qu'il est possible d'associer en parallèle plusieurs dispositifs tels que décrits précédemment, mais alimentés par des sources optiques de longueurs d'onde différentes, pour transmettre simultanément plusieurs clés de cryptage par la technique connue du multiplexage en longueur d'onde. A la réception, le démultiplexage s'effectue en utilisant en parallèle plusieurs analyseurs spectraux (250, 322) séparant les différentes longueurs d'onde sur lesquelles chaque clé de cryptage se trouve codée.

**Revendications**

1. Procédé de distribution quantique de clé de cryptage dans lequel :

    - un expéditeur émet une séquence de photons en choisissant aléatoirement, pour chaque photon, un état parmi deux états déterminés, chaque photon constituant ainsi un code pour un bit d'information,
    - un destinataire détecte les photons en choisissant aléatoirement une base de mesure parmi deux bases déterminées,
    - le destinataire indique, par un canal public, à l'expéditeur, quels sont les photons qu'il a détectés, mais sans révéler quelle base il a utilisée,

    l'expéditeur et le destinataire retiennent les bits pour lesquels les photons ont été détectés comme constituant une clé de cryptage entre eux,
    ce procédé étant **caractérisé par le fait que** :

        A) l'expéditeur :

a) engendre un faisceau lumineux ayant une certaine pulsation ($\omega_0$) et une certaine intensité,

b) produit un premier signal électrique de modulation,

c) donne à ce premier signal électrique de modulation une première phase ($\Phi A$) choisie aléatoirement parmi deux valeurs déterminées, le code de chaque bit étant ainsi déterminé par cette première phase $\Phi A$,

d) module le faisceau lumineux par ce premier signal électrique, cette modulation faisant apparaître, dans le faisceau lumineux modulé, un mode central ($\omega_0$) et au moins deux modes latéraux ($\pm \Omega$),

e) atténue l'intensité du faisceau lumineux de telle sorte que l'intensité des modes latéraux soit suffisamment faible pour qu'il n'existe qu'un seul photon dans les modes latéraux, les photons associés aux bits d'information devant constituer la clé de cryptage étant ainsi les photons transmis dans les modes latéraux, et non dans le mode central,

B) le destinataire :

a) produit un second signal électrique de modulation en synchronisme avec le premier signal électrique de modulation utilisé à l'émission,

b) donne au second signal électrique une seconde phase $\Phi_B$ choisie aléatoirement parmi deux valeurs déterminées, ces deux valeurs étant différentes des deux valeurs déterminées choisies à l'émission pour la première phase ($\Phi_A$),

c) module le faisceau lumineux reçu par le second signal électrique,

d) sépare optiquement le mode central reçu et les modes latéraux,

e) détecte, dans l'un des modes latéraux, la présence d'un photon, cette détection dépendant de la différence de phase ($\phi$) entre le premier déphasage ($\Phi_A$) choisi par l'expéditeur et le second déphasage ($\Phi_B$) choisi par le destinataire,

f) communique à l'expéditeur, par le canal public, quels sont les photons qu'il a détectés, mais sans révéler les valeurs du second déphasage $\Phi B$ qu'il a utilisées,

l'expéditeur et le destinataire retiennent alors, comme clé de cryptage, l'ensemble des bits correspondant aux photons détectés.

2. Procédé selon la revendication 1, dans lequel la modulation est une modulation d'amplitude ou de fréquence avec un certain taux de modulation (a).

3. Procédé selon la revendication 2, dans lequel le taux de modulation est inférieur à environ 0,5.

4. Procédé selon la revendication 3, dans lequel le taux de modulation est voisin de 0,1.

5. Dispositif pour la mise en oeuvre du procédé selon la revendication 1, **caractérisé par le fait qu'**il comprend :

A) côté expéditeur :

a) une source lumineuse (200,300) apte à engendrer un faisceau lumineux ayant une certaine pulsation $\omega_0$ et une certaine intensité,

b) des moyens (206,306) pour produire un premier signal électrique de modulation,

c) des moyens (208,308) pour donner à ce premier signal électrique de modulation une première phase ($\Phi_A$) choisie aléatoirement parmi deux valeurs déterminées, le code de chaque bit étant ainsi déterminé par cette première phase ($\Phi_A$),

d) des moyens (204,304) pour moduler le faisceau lumineux par ce premier signal électrique, cette modulation faisant apparaître, dans le faisceau lumineux modulé, un mode central et au moins deux modes latéraux ($\omega_0 \pm \Omega$) ,

e) un atténuateur (202) de l'intensité du faisceau lumineux, de telle sorte que l'intensité des modes latéraux soit suffisamment faible pour qu'il n'existe qu'un seul photon dans les modes latéraux, les photons associés aux bits d'information devant constituer la clé de cryptage étant ainsi les photons transmis dans les modes latéraux, et non dans le mode central,

B) côté destinataire :

a) des moyens (226) pour produire un second signal électrique de modulation en synchronisme avec le premier signal électrique de modulation utilisé à l'émission,

b) des moyens (228,310,312) pour donner au second signal électrique une seconde phase ($\Phi_B$) choisie aléatoirement parmi deux valeurs déterminées, ces deux valeurs étant différentes des deux valeurs déterminées choisies à l'émission pour la première phase ($\Phi A$),

c) des moyens (224,320) pour moduler le faisceau lumineux reçu par le second signal électrique,

d) un analyseur (250,322) pour séparer optiquement le mode central reçu et les modes latéraux,

e) un photodétecteur (252,324) recevant l'un des modes latéraux, le signal délivré par ce photodétecteur dépendant de la différence de phase ($\Phi$) entre le premier déphasage ($\Phi_{A)}$ choisi par l'expéditeur et le second déphasage ($\Phi_{B)}$ choisi par le destinataire,

f) des moyens (243) pour communiquer à l'expéditeur, par un canal public, quels sont les photons qui ont été détectés, mais sans révéler les valeurs du second déphasage ($\Phi_B$) utilisées,

et, côté expéditeur et côté destinataire, des moyens (242,244) pour retenir comme clé de cryptage, l'ensemble des bits correspondant aux photons détectés.

**6.** Dispositif selon la revendication 5, dans lequel la source lumineuse (200,300) est un laser à semi-conducteur.

**7.** Dispositif selon la revendication 5, comprenant des moyens de multidistribution de clefs de cryptage utilisant des moyens de multiplexage en longueur d'onde.

**Claims**

**1.** Method of encryption key quantum distribution in which:

- a sender sends a sequence of photons by randomly choosing, for each photon, one state from among two determined states, each photon thus constituting a code for an information bit,
- a recipient detects the photons by randomly choosing a measurement base from among two determined bases,
- the recipient indicates, through a public channel, to the sender, which photons are the ones which he has detected, but without revealing which base he has used,

the sender and the recipient adopt the bits for which the photons have been detected as constituting a mutual encryption key,

this method being **characterized in that** :

A) the sender:

a) generates a light beam having a certain angular frequency ($\omega_0$) and a certain intensity,

b) produces a first electrical modulation signal,

c) gives this first electrical modulation signal a first phase ($\phi A$) chosen randomly from two determined values, the code of each bit thus being determined by this first phase ($\phi A$),

d) modulates the light beam by this first electrical signal, this modulation giving rise, in the modulated light beam, to a central mode ($\omega_0$) and at least two lateral modes ($\omega_0 \pm \Omega$),

e) attenuates the intensity of the light beam in such a way that the intensity of the lateral modes is weak enough for their to be only one photon in the lateral modes, the photons associated with the information bits having to constitute the encryption key thus being the photons transmitted in the lateral modes, and not in the central mode,

B) the recipient:

a) produces a second electrical modulation signal in synchronism with the first electrical modulation signal used when sending,

b) gives the second electrical signal a second phase ($\phi B$) chosen randomly from two determined values, these two values being different from the two determined values chosen when sending for the first phase ($\phi A$),

c) modulates the light beam received by the second electrical signal,

d) optically separates the central mode received and the lateral modes,

e) detects, in one of the lateral modes, the presence of a photon, this detection depending on the phase difference ($\phi$) between the first phase shift ($\phi A$) chosen by the sender and the second phase shift ($\phi_B$) chosen by the recipient,

f) communicates to the sender, through the public channel, which photons are the ones that he has detected, but without revealing the values that he has used of the second phase shift ($\phi_B$),

the sender and the receiver then adopt, as encryption key, the whole set of bits corresponding to the photons detected.

2. Method according to Claim 1, in which the modulation is an amplitude or frequency modulation with a certain modulation rate (a).

3. Method according to Claim 2, in which the modulation rate is less than or around 0.5.

4. Method according to Claim 3, in which the modulation rate is about 0.1.

5. Device for the implementation of the method according to Claim 1, **characterized in that** it comprises:

A) sender side:

a) a light source (200, 300) able to generate a light beam having a certain angular frequency ($\omega_0$) and a certain intensity,
b) means (206, 306) for producing a first electrical modulation signal,
c) means (208, 308) for giving this first electrical modulation signal a first phase ($\phi_A$) randomly chosen from two determined values, the code of each bit thus being determined by this first phase ($\phi_A$),
d) means (204, 304) for modulating the light beam by this first electrical signal, this modulation giving rise, in the modulated light beam, to a central mode ($\omega_0$) and to at least two lateral modes ($\omega_0 \pm \Omega$),
e) an attenuator (202) for attenuating the intensity of the light beam, in such a way that the intensity of the lateral modes is weak enough for there to be only one photon in the lateral modes, the photons associated with the information bits having to constitute the encryption key thus being the photons transmitted in the lateral modes, and not in the central mode,

B) recipient side:

a) means (226) for producing a second electrical modulation signal in synchronism with the first electrical modulation signal used when sending,
b) means (228, 310, 312) for giving the second electrical signal a second phase ($\phi_B$) randomly chosen from two determined values, these two values being different from the two determined values chosen when sending for the first phase ($\phi_A$),
c) means (224, 320) for modulating the light beam received by the second electrical signal,
d) an analyser (250, 322) for optically separating the central mode received and the lateral modes,
e) a photodetector (252, 324) receiving one of the lateral modes, the signal delivered by this photodetector depending on the phase difference ($\phi$) between the first phase shift ($\phi_A$) chosen by the sender and the second phase shift ($\phi_B$) chosen by the recipient,
f) means (243) for communicating to the sender, through a public channel, which photons are the ones that have been detected, but without revealing the values used of the second phase shift ($\phi_B$),

and, sender side and recipient side, means (242, 244) for adopting as encryption key, the whole set of bits corresponding to the photons detected.

6. Device according to Claim 5, in which the light source (200, 300) is a semiconductor laser.

7. Device according to Claim 5, comprising means for the multidistribution of encryption keys using wavelength multiplexing means.

**Patentansprüche**

1. Verfahren zur Schlüsselverteilung mittels Quanten-Kryptographie, bei dem:

- ein Absender eine Sequenz von Photonen sendet, indem er für jedes Photon einen Zustand aus zwei festgesetzten Zuständen zufallsbedingt wählt, in einer Weise, dass jedes Photon somit einen Code für ein Informationsbit bildet,

- ein Empfänger die Photonen detektiert, indem er eine Messbasis aus zwei festgesetzten Basen zufallsbedingt wählt,

- der Empfänger dem Absender über einen öffentlichen Kanal angibt, welche Photonen er detektiert hat, aber ohne zu enthüllen, welche Basis er benutzt hat,

wobei der Absender und der Empfänger die Bit, für welche die Photonen detektiert wurden, in einer Weise berücksichtigen, als ob sie einen Kryptographie-Schlüssel zwischen ihnen bilden, wobei dieses Verfahren **dadurch gekennzeichnet ist, dass**:

A) der Absender:

a) ein Lichtbündel verursacht, das eine bestimmte Pulsation ($\omega_o$) und eine bestimmte Intensität aufweist,

b) ein erstes elektrisches Modulationssignal erzeugt,

c) diesem ersten elektrischen Modulationssignal eine erste Phase ($\Phi_A$) gibt, die zufallsbedingt aus zwei festgesetzten Werten gewählt wird, wobei der Code jedes Bits auf diese Weise durch diese erste Phase ($\Phi_A$) bestimmt wird,

d) das Lichtbündel durch dieses erste elektrische Signal moduliert, wobei diese Modulation im modulierten Lichtbündel einen zentralen Mode ($\omega_o$) und mindestens zwei seitliche Moden ($\omega_o \pm \Omega$) erscheinen lässt,

e) die Intensität des Lichtbündels derart dämpft, dass die Intensität der seitlichen Moden schwach genug ist, um nur ein einziges Photon in den seitlichen Moden bestehen zu lassen, wobei die den Informationsbit, welche den Kryptographie-Schlüssel bilden sollen, zugeordneten Photonen somit die in den seitlichen Moden und nicht im zentralen Mode übertragenen Photonen sind.

B) der Empfänger:

a) ein zweites elektrisches Modulationssignal in Synchronisation mit dem ersten elektrischen Modulationssignal, das beim Senden benutzt wurde, erzeugt,

b) dem zweiten elektrischen Signal eine zweite Phase ($\Phi_B$) gibt, die zufallsbedingt aus zwei festgesetzten Werten gewählt wird, wobei sich diese zwei Werte von den zwei festgesetzten Werten, die beim Senden für die erste Phase ($\Phi_A$) gewählt werden, unterscheiden,

c) das vom zweiten elektrischen Signal empfangene Lichtbündel moduliert,

d) den empfangenen zentralen Mode und die seitlichen Moden optisch trennt,

e) in einem der seitlichen Moden die Anwesenheit eines Photons detektiert, wobei diese Detektion von der Phasendifferenz ($\phi$) zwischen der vom Absender gewählten ersten Phasenverschiebung ($\Phi_A$) und der vom Empfänger gewählten zweiten Phasenverschiebung ($\Phi_B$) abhängt,

f) dem Absender über den öffentlichen Kanal angibt, welche Photonen er detektiert hat, aber ohne die Werte der zweiten Phasenverschiebung ($\Phi_B$), die er benutzt hat, zu enthüllen,

wobei der Absender und der Empfänger dann als Kryptographie-Schlüssel die Gesamtheit der den detektierten Photonen entsprechenden Bit einbehalten.

2. Verfahren nach Anspruch 1, bei dem die Modulation eine Amplituden- oder Frequenzmodulation mit einem bestimmten Modulationsgrad (a) ist.

3. Verfahren nach Anspruch 2, bei dem der Modulationsgrad etwa 0,5 unterschreitet.

4. Verfahren nach Anspruch 3, bei dem der Modulationsgrad in der Nähe von 0,1 liegt.

5. Vorrichtung für die Ausführung des Verfahrens nach Anspruch 1, **dadurch gekennzeichnet, dass** sie umfasst:

A) absenderseitig:

a) eine Leuchtquelle (200, 300), die ein Lichtbündel erzeugen kann, das eine bestimmte Pulsation ($\omega_o$) und eine bestimmte Intensität aufweist,

b) Mittel (206, 306), um ein erstes elektrisches Modulationssignal zu erzeugen,

c) Mittel (208, 308), um diesem ersten elektrischen Modulationssignal eine erste Phase ($\Phi_A$) zu geben, die zufallsbedingt aus zwei festgesetzten Werten gewählt wird, wobei der Code jedes Bits somit durch diese erste Phase ($\Phi_A$) bestimmt wird,

d) Mittel (204, 304), um das Lichtbündel durch dieses erste elektrische Signal zu modulieren, wobei diese Modulation im modulierten Lichtbündel einen zentralen Mode ($\omega_o$) und mindestens zwei seitliche Moden ($\omega_o \pm \Omega$) erscheinen lässt,

e) einen Dämpfer (202) der Intensität des Lichtbündels, damit die Intensität der seitlichen Moden schwach genug ist, um nur ein einziges Photon in den seitlichen Moden bestehen zu lassen, wobei die den Informationsbit, welche den Kryptographie-Schlüssel bilden sollen, zugeordneten Photonen somit die in den seitlichen Moden und nicht im zentralen Mode übertragenen Photonen sind,

B) empfängerseitig:

a) Mittel (226), um ein zweites elektrisches Modulationssignal in Synchronisation mit dem ersten elektrischen Modulationssignal, das beim Senden benutzt wird, zu erzeugen,

b) Mittel (228, 310, 312), um dem zweiten elektrischen Signal eine zweite Phase ($\Phi_B$) zu geben, die zufallsbedingt aus zwei festgesetzten Werten gewählt wird, wobei sich diese zwei Werte von den zwei festgesetzten Werten, die beim Senden für die ersten Phase ($\Phi A$) gewählt werden, unterscheiden,

c) Mittel (224, 320), um das empfangene Lichtbündel durch das zweite elektrische Signal zu modulieren,

d) einen Analysator (250, 322), um den empfangenen zentralen Mode und die seitlichen Moden optisch zu trennen,

e) einen Photodetektor (252, 324), der einen der seitlichen Moden empfängt, wobei das von diesem Photodetektor gelieferte Signal von der Phasendifferenz ($\Phi$) zwischen der vom Absender gewählten ersten Phasenverschiebung ($\Phi_A$) und der vom Empfänger gewählten zweiten Phasenverschiebung ($\Phi_B$) abhängt,

f) Mittel (243), um dem Absender über einen öffentlichen Kanal anzugeben, welche Photonen detektiert wurden, aber ohne die benutzten Werte der zweiten Phasenverschiebung ($\Phi_B$) zu enthüllen,

und absender- und empfängerseitig Mittel (242, 244), um alle Bit, die den detektierten Photonen entsprechen, als Kryptographie-Schlüssel einzubehalten.

6. Vorrichtung nach Anspruch 5, bei der die Leuchtquelle (200, 300) ein Halbleiterlaser ist.

7. Vorrichtung nach Anspruch 5, umfassend Mittel zur mehrfachen Schlüsselverteilung mittels Kryptographie durch Nutzung der Wellenlängenmultiplexmittel.

*FIG. 1*

*FIG. 2*

## FIG.3

ALICE

80

70

82

95

BOB

101    104

92

102

90

## FIG.4

ALICE                          BOB

110                                              $\Delta t$    $\Delta t$

$\Delta t$    130        140    142    144

132

112    116    118    122

114    120

126

124

*FIG.5*

EP 0 877 508 B1

*FIG.6A*

*FIG.6B*

$\Phi_A - \Phi_B = 0$

*FIG.6C*

$\Phi_A - \Phi_B = \pi$

*FIG.6D*

$\Phi_A - \Phi_B = \pi/2$

*FIG.8*

*FIG.9*

FIG.7

*FIG. 10A*

a = 2

*FIG. 10B*

a = 0,8

*FIG. 10C*

a = 0,1

## FIG.11A

## FIG.11B

## FIG.11C

## FIG.11D

## FIG.11E

## FIG.11F

## FIG.11G

## FIG.11H

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5307410 A

**Littérature non-brevet citée dans la description**

- **S.J.D. PHOENIX ; P.D. TOWNSEND.** Quantum Cryptography and Secure Optical Communications. *revue BT Techn. Journ,* 1993, vol. 11 (2), 65-75

- **G. H. BENNET ; G. BRASSARD ; A. EKERT.** Quantum Cryptography. *Scientific American,* 1993, vol. 33, 26
- **C.H. BENNETT et al.** Experimental Quantum Cryptography. *Journal of Cryptology,* 1992, vol. 5, 3-28